# EUROPEAN PATENT APPLICATION

(11) **EP 4 316 740 A1**
(43) Date of publication of application: **07.02.2024**
(21) Application number: 22188506.4
(22) Date of filing: 03.08.2022
(51) Int. Cl.: B25J 9/02, B25J 9/10, A47J 37/12

(54) **ROBOTIC ARM**

(71) Applicant: Electrolux Professional S.p.A., 33170 Pordenone (IT)
(72) Inventor: LIMANI, Marco, PORDENONE (PN) (IT); TURRIN, Daniele, PORDENONE (PN) (IT); BENVENUTI, Davide, PORDENONE (PN) (IT); GALLO, Giandomenico, PORDENONE (PN) (IT)
(74) Representative: Fiammenghi, Eva

(57) **Abstract**

There is provided an operating arm arrangement (100) and a food preparation system (400). The operating arm arrangement is configured for moving a product container configured to hold food products and comprises a transportation means extending in a first, substantially horizontal, direction (HD). The operating arm arrangement (100) further comprises an operating arm (120) comprising at least one magnet (125) configured to engage the product container. The operating arm is movably attached to the transportation means and the transportation means is configured to actuate a movement of the operating arm in a second, substantially vertical direction, such that the product container can be moved by the operating arm.

## Description

### TECHNICAL FIELD

The present invention relates to the technical field of robotic arms. In particular, the present invention relates to the technical field of robotic arms for use in professional kitchen environments.

### BACKGROUND

Professional kitchens, such as restaurant kitchens or fast-food kitchens, often have large equipment for cooking and preparing food products. Examples of such large equipment are deep fat fryers or large pasta cookers.

Operating or robotic arms used today are often very large and intrusive to the kitchen environment. This can cause a safety hazard in case the operators or kitchen workers are working in the same area.

Further, in case of a power outage some operating or robotic arms may be problematic. In case an operating arm is holding a cooking appliance, such as a frying basket, when a power outage occurs there is a risk of dropping the basket due to a lack of electrical power.

There is a need in the field for operating arms that provide new solutions to problems seen in the prior art.

### SUMMARY

The inventors have reached the insight that there is a need for an operating arm for moving a food product container in a kitchen environment that at least partially mitigates the problems stated above. In particular, there is a need for an operating arm that can move in at least one direction and releasably engage a product container in a safe and non-intrusive manner.

The present disclosure therefore provides an operating arm arrangement and a food preparation system in the independent claims that at least partially mitigates the above-mentioned drawbacks. Preferred embodiments are defined in the dependent claims.

Hence, according to a first aspect of the present disclosure, there is provided an operating arm arrangement for moving a product container configured to hold food products. The operating arm arrangement comprises a transportation means extending in a first, substantially horizontal, direction. The operating arm arrangement further comprises an operating arm comprising at least one magnet configured to engage the product container. The operating arm is movably attached to the transportation means, and the transportation means is configured to actuate a movement of the operating arm in a second, substantially vertical direction such that the product container can be moved by the operating arm.

In a second aspect of the present disclosure, a food preparation system is provided. The food preparation system comprises an operating arm arrangement according to the first aspect. The food preparation system further comprises a cooking module configured to prepare food products. The cooking module comprises at least one cooking container configured to hold a cooking medium. The cooking module further comprises at least one product container configured to be at least partially submerged in the cooking container and the cooking medium in order to prepare the food products. The product container is configured to be releasably engaged by the operating arm of the operating arm arrangement such that it is moved together with the operating arm.

By "transportation means" is herein meant a structure able to actuate a movement of the operating arm. In its broadest meaning it may be any structure where an operating arm or robotic arm may be attached for allowing movement of the operating arm in at least one direction. The transportation means may be adapted to the specific situation or kitchen environment it will be used in. As will be made clearer with regards to the figures the transportation means may be arranged behind a number of other modules and extending in a first horizontal direction.

By "operating arm" is herein meant a component extending from the transportation means that can help in operating kitchen equipment. The operating arm may be automatically controlled by a control unit or activated by an operator. The operating may also be referred to as a robotic or automatic or mechanical arm.

By "product container" is herein meant a container in which food product can be placed in order to be prepared. It may for example be a frying basket being filled with food product for being placed in heated oil. The product container may have any convenient shape or size and be made of any material. Preferably at least part of the product container is made from a metal material for being engageable by the operating arm.

By "cooking module" is herein meant a module where the food products are prepared. The cooking module of the present disclosure includes a "cooking container" with a "cooking medium". The cooking container may for example be a basin filled with a heated cooking medium, such as oil or water. The product container, for example a frying basket or similar, may then be submerged in the cooking medium in order to cook the food products. The product container may be made from a mesh or have holes in order to allow the cooking medium to enter and cook the food product.

Thus, there is provided an operating arm arrangement and a food preparation system allowing for at least partially automatic cooking of food product in a professional kitchen environment. The operating arm arrangement allows for a product container to be automatically lifted without manual operation by an operator or user. This is advantageous since it decreases the cost for manual labor as well as decreases the risks for accidents. A product container filled with food product can be heavy and handling it manually may increase the risk for accidents such as dropping the product container in the heated cooking medium. The food preparation system may be any automatic or semiautomatic cooking system for any kitchen environment. The invention is further advantageous in that the food preparation system may be adapted to the specific needs of a kitchen and the operating arm arrangement may be used for any cooking procedure.

According to an embodiment the operating arm comprises a linear actuator. The linear actuator is connected to and extending out of the transportation means, and the linear actuator is configured to actuate a movement of the operating arm in the second direction. The linear actuator may be any type of actuator for causing a movement of the operating arm in the second, substantially vertical, direction. For example, the linear actuator may be a rack and pinion linear actuator. A rack and pinion linear actuator translate rotational movement to a linear movement. A circular gear, a pinion, is rotated by for example a motor and translates the movement to a linear gear, a rack. The linear actuator may be connected to a motor, such as an electrical motor, for actuating the movement of the operating arm. Moving the operating arm in the vertical direction with the help of a linear actuator is advantageous in that the movement can be done easily and safely.

According to an embodiment the transportation means comprises a first conveyor belt connected to the operating arm. The conveyor belt is configured to actuate a movement of the operating arm in the first direction. The present embodiment is advantageous in that the operating arm can be moved both horizontally, in the first direction, and vertically in the second direction. This allows for a wider use of the operating arm arrangement and it can for example be used to operate multiple cookers standing next to each other. For example, if a plurality of deep fat fryers are placed next to each other the operating arm arrangement can move the operating arm between the deep fat fryers for moving and handling the product containers, frying baskets, of the deep fat fryers. The conveyor belt may be connected to a motor, such as an electrical motor, for actuating a movement of the conveyor belt and thusly the operating arm. Other means of actuating a movement in the first direction are possible, such as different kinds of linear actuators.

According to an embodiment, the operating arm further comprises a protruding part and a second conveyor belt configured to actuate a movement of the protruding part of the operating arm about a rotational axis. The operating arm may comprise a first part extending out of the transportation means in a substantially vertical direction and a protruding part extending out in a substantially perpendicular direction from the first part. The protruding part may be connected to the first part at a rotational joint. The second conveyor belt may be configured to rotate the protruding part about a rotational axis. The second conveyor belt may be connected to a motor, such as an electrical motor. Other ways of rotating the protruding part are also possible. This may be advantageous in that the protruding part may include the engaging means, i.e. the at least one magnet. When the protruding part is rotated the at least one magnet may also be rotated and in case it currently is engaged to a product container the product container will also be rotated. This brings multiple benefits, for example the operating arm can then be configured to shake the product container. Shaking the product container is beneficial when placing the product container with food product in a cooking medium, such as hot oil, for ensuring that the food product does not stick together. Further, by shaking the product container when raising it out of a cooking medium excess cooking medium can be returned back into the cooking container. Rotating part of the operating arm and the product container is further an advantageous way of depositing the food product in a suitable location.

According to an embodiment, the operating arm comprises a food product conveying means attached to the protruding part and configured to guide food product into and out of the product container. After food has been properly cooked and the operating arm has moved the product container to a specific container the food product can be guided out of the product container by rotation. The food product conveying means can help in properly guiding the food product to ensure that all food product ends up in the determined depositing location. According to an embodiment, the food product conveying means is U-shaped. Depending on the specific operating arm arrangement he food product conveying means may have different features. In case the rotation is only done in one direction while emptying the product container it may be advantageous to shape the food product conveyor as a U or similar shape. This allows for an easy construction of the food product conveyor. Further, less material is needed for the food product conveyor which may for example be shaped out of a metal sheet.

According to an embodiment, the protruding part comprises a first part extending substantially horizontally and a second part extending substantially vertically. The at least one magnet is attached to the first part, and the food product conveying means is attached to the second part. The present embodiment is advantageous since the operating arm is adapted to a standard product container. In case the operating arm is meant for use together with a deep fat fryer, or similar kitchen equipment, the product container may be designed to have a handle and a basket part. The handle may then be engaged by the at least one magnet and when the operating arm is moved vertically downwards for engaging the product container the food product conveying means may be configured to be at least partially submerged in the cooking medium and engage an upper edge of the basket part of the product container. This is advantageous since it can diminish the spill of the cooking medium such as heated oil in a fryer.

According to an embodiment, the protruding part comprises an L-shape configured to match an L-shaped handle of the product container. The present embodiment may be adapted to easily engage a standard product container with an L-shaped handle.

According to an embodiment, the at least one magnet is at least one electromagnet. The operating arm comprises at least one magnet for engaging the product container in order to move for at least partially automating a cooking process. In case the at least one magnet is an electromagnet the product container can be easily engaged and disengaged. By applying a current the electromagnet can be made magnetic and the product container can be engaged and moved. By turning off the power the product container can then be released back into a cooking container by the operating arm.

According to an embodiment, the at least one magnet is at least one electropermanent magnet. An electropermanent magnet is a type of electromagnet but with opposite features. An electropermanent magnet acts as a permanent magnet when no current is applied and loses its magnetic capabilities when a current is applied. Using an electropermanent magnet may be advantageous in that less power is needed since the current only needs to be turned on when releasing the product container. Further, the present embodiment is especially advantageous in case of a power outage since the operating arm will not drop the product container. In case the engaging means relies on an electric current there is a risk of dropping the product container. This is a safety risk since the product container often is supposed to be placed in a cooking container with a heated cooking medium such as boiling water or hot oil. According to an embodiment, the food preparation system further comprises a dispensing module configured to store food products to be prepared and to dispense an amount of food products. The dispensing module is arranged next to the cooking module and in front of the operating arm arrangement. By "dispensing module" is herein meant a module that can dispense or dose an amount of food product. The dispensing module may for example be a refrigerator or freezer storing pasta, frozen or fresh french-fries or other food products to be cooked. The dispensing module may then be able to dispense an amount of the stored food product into the product container, this may for example be controlled by the control unit. According to an embodiment, the food preparation system further comprises a cooked food storage module configured to receive and store the prepared food products. The cooked food storage module is arranged next to the cooking module and in front of the operating arm arrangement. By "cooked food storage module" is herein meant a module where cooked food may be stored temporarily before being served to a customer. The module may also be referred to as a stowing, holding or keeping unit or module where food product prepared in by the cooking module may be stored momentarily before being handed out for serving. According to an embodiment, the operating arm is configured to shake the at least one product container while it is at least partially submerged in the cooking container and the cooking medium such that food products held in the at least one product container are prevented from sticking to each other. When preparing food product in larger kitchen equipment there is a possibility of food sticking together while cooking. By allowing the operating arm to shake the product container this is mitigated which ensures better and more standardized cooking.

According to an embodiment, the operating arm is configured to shake the at least one product container while lifting it out of the cooking container such that an excess amount of cooking medium is removed from the prepared food product. By allowing the operating arm to shake the product container for removing excess cooking medium is advantageous in that less cooking medium is spilled.

It is noted that other embodiments using all possible combinations of features recited in the above described embodiments may be envisaged. Thus, the present disclosure also relates to all possible combinations of features mentioned herein. Any embodiment described herein may be combinable with other embodiments also described herein, and the present disclosure relates to all combinations of features.

### BRIEF DESCRIPTION OF THE DRAWINGS

Exemplifying embodiments will now be described in more detail, with reference to the following appended drawings:
Figure 1 schematically illustrates an operating arm arrangement in accordance with an embodiment of the present invention.
Figures 2a, 2b, 2c schematically illustrate operating arm arrangements in accordance with embodiments of the present invention.
Figures 3a, 3b, 3c schematically illustrates part of an operating arm arrangement in accordance with embodiments of the present invention.
Figures 4a, 4b, 4c schematically illustrates food preparation systems in accordance with embodiments of the present invention.
Figure 5 schematically illustrates a food preparation system in accordance with an embodiment of the present invention.

### DETAILED DESCRIPTION

As illustrated in the figures, the sizes of the elements and regions may be exaggerated for illustrative purposes and, thus, are provided to illustrate the general structures of the embodiments. Like reference numerals refer to like elements throughout.

Exemplifying embodiments will now be described more fully hereinafter with reference to the accompanying drawings, in which currently preferred embodiments are shown. The invention may, however, be embodied in many different forms and should not be construed as limited to the embodiments set forth herein; rather, these embodiments are provided for thoroughness and completeness, and fully convey the scope of the invention to the skilled person.

In some of the figures a food preparation system is disclosed. To further explain the features of the invention a deep fat fryer has been chosen to exemplify the food preparation system. However, it is clear that this is an exemplary food preparation system and other kitchen appliances may be exchanged with the examples herein in order to prepare other food products. For example, a modular and automatic pasta cooker is also envisioned and may be equally plausible as the food preparation system.

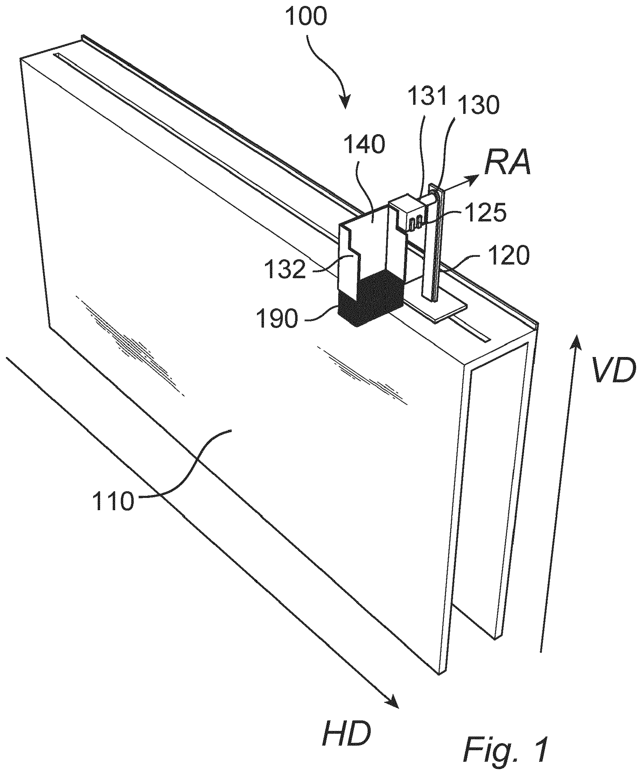

With reference to Figure 1 an operating arm arrangement 100 in accordance with embodiment of the invention is disclosed.

The operating arm arrangement 100 is configured to move a product container 190. The product container 190 is configured to hold food products. The product container 190 may for example be a frying basket being part of a deep fat fryer or a basket or pot configured to hold pasta for being cooked in a pasta cooker.

The operating arm arrangement 100 comprises a transportation means 110 extending in a first direction HD. The first direction HD may be substantially horizontal. The operating arm arrangement 100 further comprises an operating arm 120. The operating arm 120 comprises at least one magnet 125 configured to engage the product container 190. The operating arm 120 is movably attached to the transportation means 110. The transportation means 110 is configured to actuate a movement of the operating arm 120 in a second direction VD. The second direction VD may be substantially vertical. When the operating arm 120 is moved in the second direction VD it may move the product container 190.

The operating arm arrangement 100 may be used in a food preparation system such as an at least partially automatic frying system or pasta cooker. The operating arm arrangement 100 may for example be placed behind a deep fat fryer and the operating arm 120 may be configured to engage the product container 190 in order to lift or lower the product container 190 out or into a basin or cooking container with hot oil. The product container 190 may be made from a metal mesh or perforated sheet for allowing oil or water to engage the food product in order to prepare the food product. The product container 190 may also be configured to be fully submerged in a cooking medium for allowing the cooking medium to enter the product container 190 in order to prepare the food product.

The transportation means 110 may further be configured to actuate a movement of the operating arm 120 in the first direction HD. For example, the transportation means 110 may comprise a first conveyor belt (not shown) connected to the operating arm 120 for actuating the movement. By being able to move the operating arm 120 both vertically and horizontally the operating arm arrangement 100 may be used for many different applications. For example, the operating arm arrangement 100 may be able to control the food preparation process of many cooking modules, such as many deep fat fryers standing next to each other. Other use cases of the operating arm arrangement will be discussed in relation to later figures.

The operating arm 120 shown in Figure 1 comprises a protruding part 130. The protruding part 130 may be configured to be rotated about a rotational axis RA. The operating arm may comprise a second conveyor belt (not shown) configured to actuate a rotation of the protruding part 130 of the operating arm 120 about the rotation axis RA

The first and second conveyor belts may each be connected to an individual motor, such as an electrical motor, for actuating the movements. The motors may be controlled by a control unit (not shown).

The operating arm 120 further comprises a food product conveying means 140 attached to the protruding part 130. The food product conveying means 140 may be configured to guide food product into and out of the product container 190. Depending on where the operating arm arrangement 100 is placed an operator or a dispensing unit, such as an automatically dispensing freezer, may load the product container with food product. The food product conveying means 140 may be configured to guide the food product into the product container 190. Further, upon rotating the protruding part 130 about the rotation axis RA the food product conveying means 140 may be configured to guide the prepared food product out of the product container 190. The food product may be guided to any suitable location. The food product conveying means 140 may be made from any suitable material and have any suitable shape. For example, the food product conveying module 140 may be shaped by a metal sheet and may be shaped as a hollow rectangular cuboid. In Figure 1 the food product conveying means 140 has a U-shape with one wall missing. In this embodiment the food product conveying means 140 may have been formed by shaping a metal sheet. Further, the food product conveying means 140 has a tapered shape, which may help in guiding the food product to the correct storing location. However, other shapes are plausible.

The protruding part 130 of the operating arm 120 comprises a first part 131 extending substantially horizontally. The at least one magnet 125 is attached to the first part 131. The protruding part 130 further comprises a second part 132 extending substantially vertically. The food product conveying means 140 is attached to, or is, the second part 132. The shape of the protruding part 130 may be configured to match the shape of the product container 190. The handle (not shown) of the product container 190 may be configured to extend along the second part 132 up to the first part 131 where it may be engaged by the at least one magnet. The protruding part 130 may be such that it has an L-shape configured to match an L-shaped handle of the product container. More details regarding how the handle of the product container 190 can be engaged will be discussed in further detail with regards to the following figures.

The operating arm arrangement 100 may further comprise a control unit (not shown) in order to control the operation of the operating arm 120.

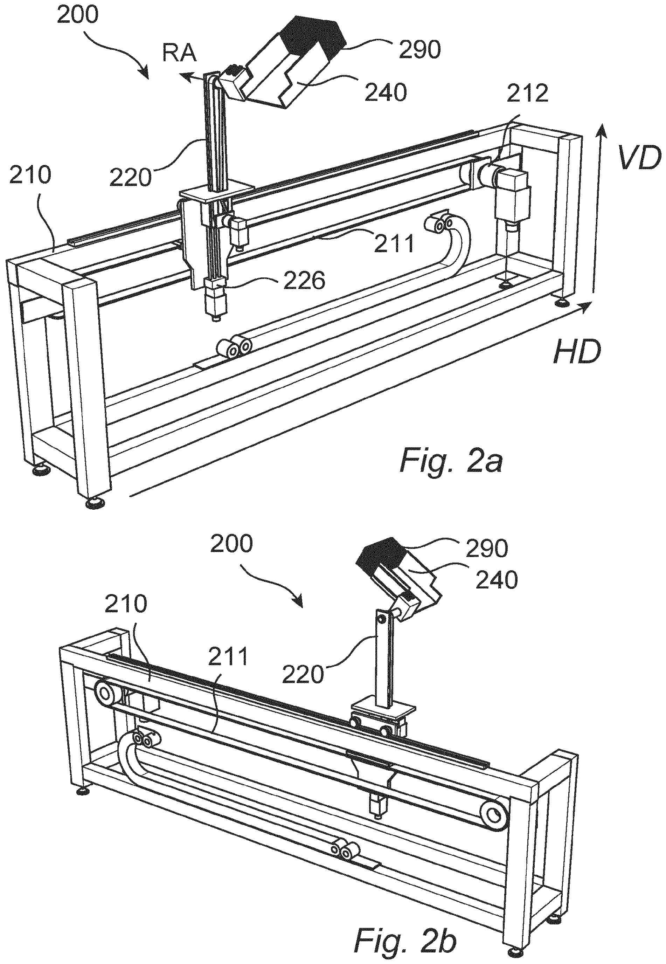

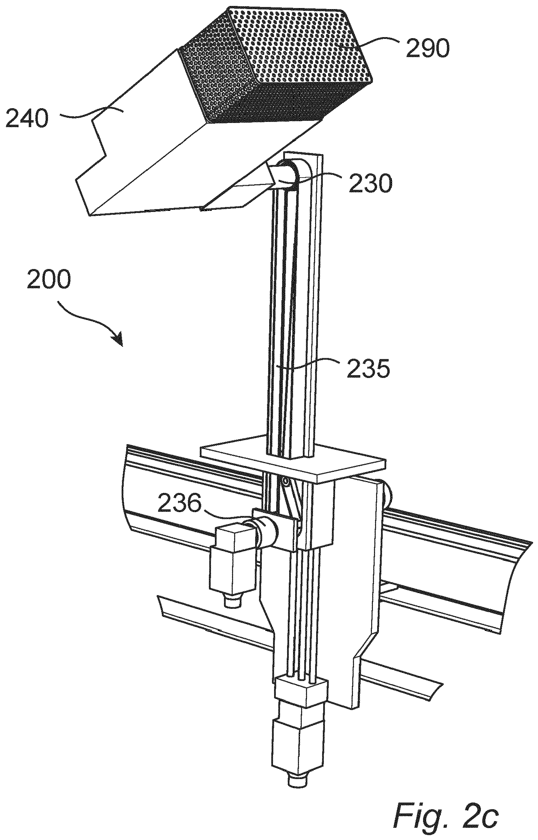

With reference to Figures 2a, 2b and 2c operating arm arrangements 200 in accordance with embodiments of the invention are shown.

Figures 2a, 2b, and 2c shows the protruding part 230 of the operating arm 220 when it has been rotated. This may be when the product container 290 is to be emptied and the food product to be guided by the food product conveying means 240 out of the product container 290.

As can be seen in Figure 2a and 2b the transportation means 210 comprises a linear actuator 226. The linear actuator 226 is mechanically connected to the operating arm 220 and is configured to actuate a movement of the operating arm 220 in the second direction VD. The linear actuator 226 shown in Figure 2a and 2b is a so-called rack and pinion linear actuator 226. The rack and pinion actuator uses the movement of a circular gear, pinion, engaging a linear gear, rack, for translating a rotational movement into a linear movement. The gears are not shown in the Figures. It is further understood that other means for actuating a linear motion of the operating arm 220 are possible, for example by a conveyor belt or similar. The circular gear, or pinion, may be connected to a motor, such as an electrical motor, for driving the circular gear and thus the linear gear and thusly causing linear motion of the operating arm 220. The motor (not shown) may be controlled by a control unit. The control unit may be part of the operating arm arrangement 200 or part of a food preparation system including the operating arm arrangement 200.

The transportation means 210 further comprises a first conveyor belt 211 connected to the operating arm 220. The conveyor belt 211 is configured to actuate a movement of the operating arm in the first direction HD. Thusly, the conveyor belt 211 can actuate a movement of the operating arm along the extension of the transportation means 210. The first conveyor belt 211 is attached to a motor 212 configured to actuate movement of the first conveyor belt 211. The motor 212 may be any type of motor, such as an electrical motor. The motor 212, and thusly the horizontal movement of the operating arm 220, may be controlled by a control unit (not shown).

The operating arm 220 can thusly be moved both horizontally and vertically. This ensures that the operating arm 220 can move the product container 290 both horizontally and vertically for enabling a cooking or food preparation process.

Figure 2c shows a second conveyor belt 235 configured to actuate a rotation of the protruding part 230 about the rotational axis RA. The second conveyor belt 235 is attached to a motor 236 and goes around the protruding part 230 for enabling rotation of the protruding part. The motor 236 may be any type of motor, such as an electrical motor, and may be controlled by a control unit. By rotation of the protruding part 230 the food product (not shown) can be guided out of the product container 290 by the food product conveying means 240 to a suitable location.

As can be seen in Figures 2a, 2b and 2c the food product conveying means 240 may be configured to match a top area of the product container 290. This is advantageous since less food product risks spilling. Further, when lowering the product container 290 into a cooking container, such as a basin filled with hot oil or water or other cooking medium, the food product conveying means may also be at least partially submerged. This can lower the risk of spillage or splashing of the cooking medium which is advantageous.

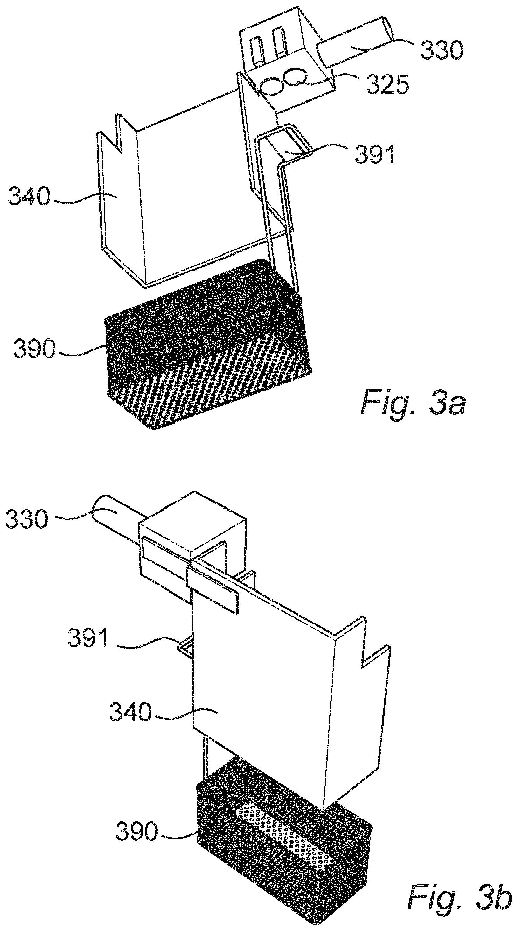

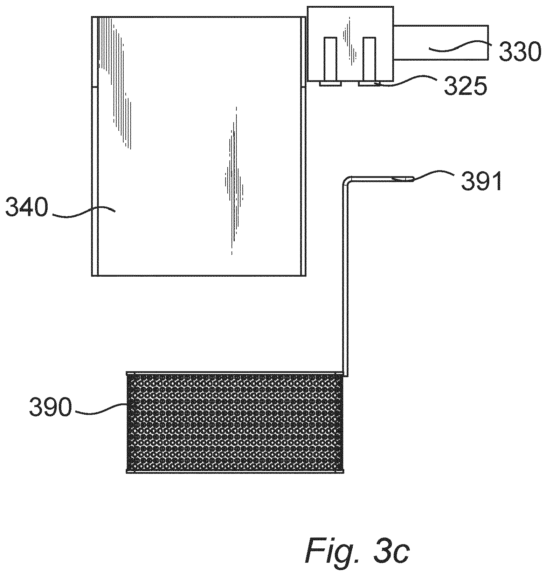

With reference to Figures 3a, 3b, and 3c the protruding part 330 of an operating arm of an operating arm arrangement according to an embodiment of the invention is shown.

The protruding part 330 comprises a first part 331 extending substantially horizontally and a second part 332 extending substantially vertically. The operating arm comprises two magnets 325 arranged on the first part 331 and a food product conveying means 340 arranged on the second part. The two magnets 325 are configured to engage the product container 390.

The two magnets 325 may be any type of magnets for engaging the product container 390. For example, the magnets 325 may be permanent magnets 325. In that case, the operating arm or any other structure may need a releasing mechanism for mechanically disengaging the product container 390 for depositing it in a cooking module such as a fryer. In other embodiments, the magnets 325 may be electromagnets 325. Electromagnets may be preferable since they can be turned on and off at will for engaging or disengaging the product container 390. Most preferably the magnets 325 may be electropermanent magnets 325. An electropermanent magnet is a magnet that is a type of permanent magnet in which the external magnetic field can be switched off by a pulse of electric current. When no current runs through the electropermanent magnet it acts as a permanent magnet, but when a current is applied the magnet loses some or all of its magnetism. This may be advantageous to use for the operating arm arrangement according to the present disclosure. Compared to an electromagnet which is magnetic when a current is applied, less power is needed since current is only needed when releasing the product container 390. Further, an electropermanent magnet may be advantageous in case of a power outage or power failure since the magnets will stay functioning. This can ensure that the product container 390 is not dropped, for example into hot water or oil, which may be a potential safety risk.

The protruding part 330 of an operating arm shown in Figures 3a, 3b and 3c comprises engaging means 325 comprising of two electropermanent magnets 325. The magnets 325 are configured to engage a handle 391 of the product container 390. The handle 391 may be made from a ferromagnetic material, such as a metal. In order to release or disengage from the handle 391 a current can be applied in or over the electropermanent magnets 325.

The operating arm further comprises a food product conveying means 340. The food product conveying means 340 is configured to guide the food product into and out of the product container 390. The food product conveying means 340 of Figures 3a, 3b and 3c matches a top are of the product container 390 in order to ensure that all food products can be smoothly guided out of or into the product container 390. The food product conveying means 340 may be made from any suitable material, for example bended or formed out of a metal sheet. The food product conveying means 340 in Figure 3a, 3b and 3c has a U-shape in order to save material. The food product conveying means 340 may further help in shielding from cooking medium spill when the product container is lifted out of or sunken into the cooking medium of the cooking container. The food product conveying means 340 may be straight, as in Figures 3a, 3b or 3c, or have a tapered shape as disclosed in Figure 1. Other shapes are also possible.

The operating arm may be configured to rotate around a rotation axis. When rotating the operating arm, the food product may exit the product container 390 and be guided by the food product conveying means 340 into a suitable location.

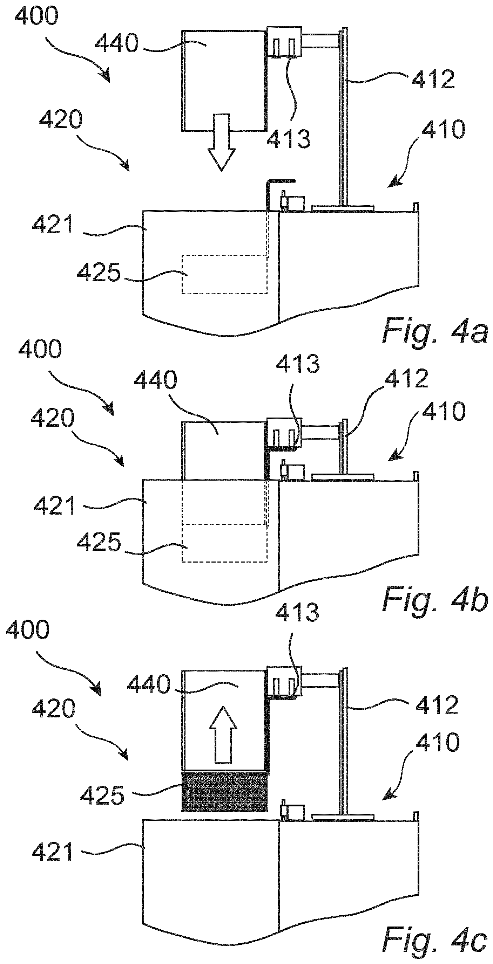

With reference to Figures 4a, 4b and 4c a food preparation system 400 in accordance with embodiments of the present invention are shown.

The food preparation system 400 comprises an operating arm arrangement 410 that may include any features discussed in relation to any of the Figures of the present disclosure. Further, the food preparation system 400 comprises a cooking module 420 configured to prepare food products and arranged in front of the operating arm arrangement 410. The cooking module 420 may be any type of cooking module 420, such as a deep fat fryer or pasta cooker. The cooking module 420 comprises a cooking container 421 configured to hold a cooking medium (not shown). The cooking medium may be any cooking medium, for example hot oil or hot water for preparing food. The cooking module 420 further comprises a product container 425 configured to be at least partially submerged in the cooking container 421 and the cooking medium in order to prepare the food products. The product container 425 is configured to be releasably engaged by the operating arm 412 of the operating arm arrangement 410 such that it is moved together with the operating arm 412. The food preparation system 400 may comprise more than one cooking module 420. A cooking module 420 may include more than one cooking container 421 and more than one product container 425.

In Figure 4a the operating arm 412 has been placed above the cooking module 420 and one product container 425. The product container 425 is in Figure 4a submerged in the cooking container 421 and the cooking medium (not shown). Figure 4a may show when the product container 425 is to be picked up by the operating arm 412 in order to be filled with food product. Figure 4a may also show when the product container is to be picked up after the food product has been prepared.

In Figure 4b the operating arm 412 has been moved vertically towards the product container 425 so that it can engage the product container. The operating arm comprises an engaging means 413, in Figures 4a, 4b and 4c depicted as two magnets 413. The magnets 413 may be any type of magnets for engaging the product container 425. For example, the magnets 413 may be permanent magnets. In this example, the operating arm 412 or any other structure may need a releasing mechanism for mechanically disengaging the product container 425 for depositing it in the cooking container 421. In other embodiments, the magnets 413 may be electromagnets 413. Electromagnets may be preferable since they can be turned on and off at will for engaging or disengaging the product container 425. Most preferably the engaging means 413 may be electropermanent magnets 413. An electropermanent magnet is a magnet that is a type of permanent magnet in which the external magnetic field can be switched off by a pulse of electric current. When no current runs through the electropermanent magnet it acts as a permanent magnet, but when a current is applied the magnet loses some or all of its magnetism. This may be advantageous to use for the engaging means 413. Compared to an electromagnet which is magnetic when a current is applied, less power is needed since current is only needed when releasing the product container 413. Further, an electropermanent magnet may be advantageous in case of a power outage or power failure since the engaging means 413 will stay functioning. This can ensure that the product container 425 is not dropped into the cooking medium which may be a potential safety risk. In Figure 4c the product container 425 is lifted out of the cooking container 421 and can then be moved by the operating arm 412 horizontally.

The operating arm 412 may then be rotated about a rotational axis. For example, a conveying belt may be connected to a motor and to a rotational joint in the operating arm 412 which may cause a rotating movement. By moving the conveyor belt the operating arm 412, or part of the operating arm 412, can thusly be rotated. By alternating the movement of the conveyor belt the operating arm 412 can be shaken. Shaking the operating arm 412 may be advantageous when it is engaged to the product container 425. For example, shaking the operating arm 412 and the product container 425 when the product container 425 is submerged in the cooking medium can ensure that the food product does not stick together. Further, shaking the operating arm 412 and the product container 425 when lifting the product container 425 out of the cooking medium can ensure that any excess cooking medium stuck to the food product or product container 425 is released down into the cooking container 421 again.

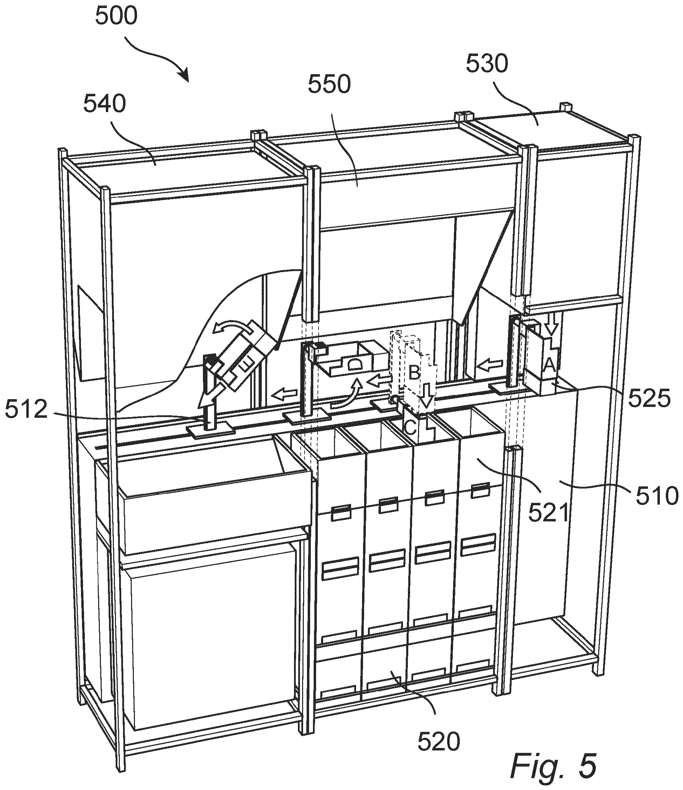

With reference to Figure 5 a food preparation system 500 in accordance with an embodiment of the present disclosure is shown.

The food preparation system 500 can also be described as a modular cooking apparatus 500. The food preparation system 500 may include any feature as discussed in relation to the other Figures. Additionally to the food preparation system described with reference to Figures 4a, 4b and 4c the food preparation system 500 in Figure 5 further comprises a dispensing module 530. The dispensing module 530 is configured to store food products to be prepared and to dispense an amount of food products. The dispensing module 530 is arranged next to the cooking module 520 and in front of the operating arm arrangement 510. The food preparation system further comprises a cooked food storage module 540. The cooked food storage module 540 is configured to receive and store the prepared food products. The cooked food storage module 540 is arranged next to the cooking module 520 and in front of the operating arm arrangement 510. The cooked food storage module 540 may include heating means for keeping a temperature of the prepared food. The heating means may for example be heating lamps, such as infrared lamps, or be created by air convection.

Figure 5 discloses different positions of the operating arm 512 and is meant to disclose the possible movement of the operating arm 512 throughout the modules of the food preparation system 500.

Figure 5 shows the operating arm 512 in different positions named A, B, C, D and E. In all of these positions the operating arm 512 may or may not be engaged to the product container 525.

Position A may correspond to when the operating arm 512 is in an idle position, either when the operating arm 512 is waiting for food product to be prepared in a cooking container 521 or when the food preparation system is not in use. Further, position A may correspond to when the operating arm 512 has moved to the dispensing unit with a product container 525 to catch food product dispensed by the dispensing module 530 and move to the cooking module 520.

Position B may correspond to a position prior or after to leaving or picking up a product container 525 from a cooking container 521. It is understood that position B may be over any cooking container 521 of the cooking module 520. In the present example, the cooking module 520 has four cooking containers 521 all capable of cooking food products and all may have a corresponding product container 525 movable by the operating arm 512. Position C may correspond to a position when leaving or picking up a product container 525 from a cooking container 521. After a product container 525 without food product has been picked up, the operating arm may go to position A via position B. After a product container 525 with food product has been picked up, the operating arm may go to position D via position B.

Position D may correspond to when the operating arm 512 has started rotating prior to depositing the food product in the cooked food storage module 540. After position D the operating arm can be moved into the cooked food storage module 540 and the rotation continued until it reaches position E and the food product is delivered to the cooked food product storage module 540.

It is understood that the positions are exemplary and other positions and moving patterns are possible for the operating arm 512. The operating arm 512 may be controlled by a control unit.

In other words, the cooking process may be described as follows with regards to Figure 5:
1. The dispensing module 530 may be loaded with product at the beginning of the day. The food product is stored and kept at a preservation temperature. The cooking module 520 may be turned on for heating the cooking medium in preparation of cooking.
2. A cooking cycle is launched, for example by a time indication or input by an operator. The operating arm 512 then moves from position A to position B and then position C in order to engage a product container 525.
3. Once the product container 525 is engaged, it moves from position C to position A and food product is dispensed into the product container 525. The operating arm 512 the returns to position C and disengages the product container 525. Before disengaging the product container 525 the operating arm 512 may shake the product container 525 in order to avoid the food product to stick together.
4. The operating arm 512 may be moved away while the food product is prepared, for example back to position A or to another product container 525 to start another cooking procedure simultaneously.
5. The operating arm 512 returns to position C in order to get the product container 525 when the food product is properly cooked. While removing and raising the product container 525 the operating arm 512 may shake the product container 525 for any excess cooking medium to be released from the food product.
6. The operating arm 512 is moved to position D and then position E in order to dispense or leave the food product at the cooked food storage module 540. The operating arm 512 may then return to an idle position at position A after leaving the product container 525. Alternatively, the operating arm 512 may move to position A together with the product container 525 in order to repeat the process.

Further, as seen in Figure 5 the food preparation system 500 may comprise a ventilation module 550. The ventilation module 550 may be connected to an external exhaust in order to remove the air, steam or the like.

Although features and elements are described above in particular combinations, each feature or element can be used alone without the other features and elements or in various combinations with or without other features and elements.

Additionally, variations to the disclosed embodiments can be understood and effected by the skilled person in practicing the claimed invention, from a study of the drawings, the disclosure, and the appended claims. In the claims, the word "comprising" does not exclude other elements, and the indefinite article "a" or "an" does not exclude a plurality. The mere fact that certain features are recited in mutually different dependent claims does not indicate that a combination of these features cannot be used to advantage.

## Claims

1. An operating arm arrangement (100) for moving a product container configured to hold food products, the operating arm arrangement comprises:
a transportation means (110) extending in a first, substantially horizontal, direction (HD), and
an operating arm (120) comprising at least one magnet (125) configured to engage the product container, wherein the operating arm is movably attached to the transportation means, and wherein the transportation means is configured to actuate a movement of the operating arm in a second, substantially vertical direction (VD), such that the product container can be moved by the operating arm.

2. The operating arm arrangement according to claim 1, wherein the transportation means comprises a linear actuator (226), wherein the linear actuator is mechanically connected to the operating arm, and wherein the linear actuator is configured to actuate a movement of the operating arm in the second direction.

3. The operating arm arrangement according to claim 1 or 2, wherein the transportation means comprises a first conveyor belt (211) connected to the operating arm, and wherein the conveyor belt is configured to actuate a movement of the operating arm in the first direction.

4. The operating arm arrangement according to any one of the preceding claims, wherein the operating arm further comprises a protruding part (130) and a second conveyor belt (235) configured to actuate a rotation of the protruding part of the operating arm about a rotational axis (RA).

5. The operating arm arrangement according to claim 4, wherein the operating arm comprises a food product conveying means (140) attached to the protruding part and configured to guide food product into and out of the product container.

6. The operating arm arrangement according to claim 5, wherein the food product conveying means is U-shaped.

7. The operating arm arrangement according to claim 4 or 5, wherein the protruding part comprises a first part (131) extending substantially horizontally and a second part (132) extending substantially vertically, wherein the at least one magnet is attached to the first part, and wherein the food product conveying means is attached to the second part.

8. The operating arm arrangement according to claim 7, wherein the protruding part comprises an L-shape configured to match an L-shaped handle of the product container.

9. The operating arm arrangement according to any one of the preceding claims, wherein the magnet is an electromagnet.

10. The operating arm arrangement according to any one of claims 1-8, wherein the magnet is an electropermanent magnet.

11. A food preparation system (400) comprising:
an operating arm arrangement (410) according to any one of the preceding claims,
a cooking module (420) configured to prepare food products and arranged in front of the operating arm arrangement, comprising:
at least one cooking container (421) configured to hold a cooking medium, and
at least one product container (425) configured to be at least partially submerged in the cooking container and the cooking medium in order to prepare the food products, wherein the product container is configured to be releasably engaged by the operating arm (412) of the operating arm arrangement such that it is moved together with the operating arm.

12. The food preparation system according to claim 11, further comprising a dispensing module (530) configured to store food products to be prepared and to dispense an amount of food products, wherein the dispensing module is arranged next to the cooking module and in front of the operating arm arrangement.

13. The food preparation system according to claim 11 or 12, further comprising a cooked food storage module (540) configured to receive and store the prepared food products, wherein the cooked food storage module is arranged next to the cooking module and in front of the operating arm arrangement.

14. The food preparation system according to any one of claim 11-13 wherein the operating arm is configured to shake the at least one product container while it is at least partially submerged in the cooking container and the cooking medium, such that food products held in the at least one product container are prevented from sticking to each other.

15. The food preparation system according to any one of claim 11-14, wherein the operating arm is configured to shake the at least one product container while lifting it out of the cooking container, such that an excess amount of cooking medium is removed from the prepared food product.
